# EUROPÄISCHE PATENTANMELDUNG

(11) **EP 4 123 413 A1**
(43) Veröffentlichungstag der Anmeldung: **25.01.2023**
(21) Anmeldenummer: 22176820.3
(22) Anmeldetag: 01.06.2022
(51) Int. Cl.: G05G 1/08, G05G 1/10, G05G 5/06, B60S 3/00, G07F 17/20

(54) **BEDIENEINHEIT UND VERFAHREN ZUM BETRIEB DER BEDIENEINHEIT**

(30) Priorität: 23.07.2021 CH 0700952021
(71) Anmelder: KSU A-Technik AG, 5610 Wohlen (CH)
(72) Erfinder: Lian, Sergio, 4800 Zofingen (CH); Thüler, Adrian, 3507 Biglen (CH)
(74) Vertreter: Rigling, Peter Daniel

(57) **Zusammenfassung**

Eine Bedieneinheit (1) ist angegeben, umfassend ein Gehäuse (4) mit mindestens einer transparenten Aussenwand (5) und einen Drehknopf (6), der von ausserhalb des Gehäuses (4) manuell bedienbar ist und in vordefinierbare Wahlpositionen drehbar ist. Die erfindungsgemässe Bedieneinheit (1) zeichnet sich dadurch aus, dass eine im Gehäuse (4) gelagerte und durch die transparente Aussenwand (5) hindurchgeführte Drehsachse vorhanden ist, an deren äusserem Ende der Drehknopf (6) befestigt ist, dass ein Winkelgeber mit der Drehachse zur Ermittlung eines Absolutwinkels des Drehknopfes (6) wirkverbunden ist und dass die Wahlpositionen mit dem Winkelgeber detektierbar sind.

## Beschreibung

### TECHNISCHES GEBIET

Die vorliegende Erfindung betrifft eine Bedieneinheit nach dem Oberbegriff des Patentanspruchs 1 sowie ein Verfahren zum Betrieb der Bedieneinheit.

### STAND DER TECHNIK

Aus dem Stand der Technik sind Bedieneinheiten bekannt, die eine Selektion einer Wahlmöglichkeit aus einer Vielzahl von Wahlmöglichkeiten anbieten. Solche Bedieneinheiten werden insbesondere bei Autowaschanlagen verwendet, bei denen ein Benutzer ein gewünschtes Waschprogramm auswählen kann. Da nicht alle Autowaschanlagen mit identischen Wahlmöglichkeiten ausgestattet sind, müssen die Bedieneinheiten spezifisch für eine Waschanlage ausgelegt werden und auf die verfügbaren Waschprogramme, d.h. sowohl was die Anzahl der verfügbaren Waschprogramme als auch was die Funktionen der Waschprogramme betrifft, für jede Autowaschanlage spezifisch entwickelt werden. Dies führt zu entsprechend hohen Kosten bei der Ausrüstung von Autowaschanlagen.

### BESCHREIBUNG DER ERFINDUNG

Eine Aufgabe der vorliegenden Erfindung besteht daher darin, eine Bedieneinheit bereitzustellen, welche mit geringem Aufwand anpassbar ist und ein robustes und zuverlässiges Auswählen von Wahlmöglichkeiten erlaubt.

Diese Aufgabe wird durch die Bedieneinheit mit den Merkmalen des Anspruchs 1 gelöst. Weitere Ausführungsvarianten sind in weiteren abhängigen Ansprüchen angegeben. Ferner ist ein Verfahren zum Betrieb der Bedieneinheit durch die Merkmale von Anspruch 11 definiert. Eine weitere Ausführungsvariant des Verfahrens ist im anhängigen Anspruch 12 angegeben.

Die erfindungsgemässe Bedieneinheit umfasst:
- ein Gehäuse mit mindestens einer transparenten Aussenwand und
- einen Drehknopf, der von ausserhalb des Gehäuses manuell bedienbar ist und in vordefinierbare Wahlpositionen drehbar ist,
wobei sich die erfindungsgemässe Bedieneinheit dadurch auszeichnet,
- dass eine im Gehäuse gelagerte und durch die transparente Aussenwand hindurchgeführte Drehsachse vorhanden ist, an deren äusserem Ende der Drehknopf befestigt ist,
- dass ein Winkelgeber mit der Drehachse zur Ermittlung eines Absolutwinkels des Drehknopfes wirkverbunden ist und
- dass die Wahlpositionen mit dem Winkelgeber detektierbar sind.

Eine Ausführungsvariante der erfindungsgemässen Bedieneinheit besteht darin, dass die Wahlpositionen durch mechanische und/oder magnetische Arretiereinheiten vordefinierbar sind.

Weitere Ausführungsvarianten der erfindungsgemässen Bedieneinheit bestehen darin, dass der Winkelgeber mit einer Anzeigeeinheit wirkverbunden ist.

Weitere Ausführungsvarianten der erfindungsgemässen Bedieneinheit bestehen darin, dass die Anzeigeeinheit kleiner ist als die transparente Aussenwand, wobei die Anzeigeeinheit vorzugsweise in die transparente Aussenwand integriert ist.

Weitere Ausführungsvarianten der erfindungsgemässen Bedieneinheit bestehen darin, dass die transparente Aussenwand mit einem Leuchtmittel hinterleuchtet ist, wobei das Leuchtmittel vorzugsweise aus einem in einem Randbereich der transparenten Aussenwand angeordneten LED-Streifen besteht.

Noch weitere Ausführungsvarianten der erfindungsgemässen Bedieneinheit bestehen darin, dass die Anzeigeeinheit und die transparente Aussenwand gleich gross sind, wobei die transparente Aussenwand die Anzeigeeinheit vorzugsweise ganz überdeckt.

Noch weitere Ausführungsvarianten der erfindungsgemässen Bedieneinheit bestehen darin, dass die Arretiereinheiten aus Permanentmagneten und entsprechenden Gegenpolen bestehen.

Noch weitere Ausführungsvarianten der erfindungsgemässen Bedieneinheit bestehen darin, dass als Arretiereinheit einerseits ein um die Drehachse mittels Drehknopf drehbarer Exzenter mit einem Permanentmagneten und andererseits eine Dreh-fixierte Halterung zur Aufnahme von Gegenpolen an den Wahlpositionen vorgesehen sind.

Noch weitere Ausführungsvarianten der erfindungsgemässen Bedieneinheit bestehen darin, dass der Winkelgeber im Gehäuse angeordnet ist.

Noch weitere Ausführungsvarianten der erfindungsgemässen Bedieneinheit bestehen darin, dass ein Kassenmodul ausserhalb des Gehäuses angeordnet ist, wobei das Kassenmodul mit dem Gehäuse wirkverbunden ist.

Schliesslich betrifft die vorliegende Erfindung ein Verfahren zum Betrieb der Bedieneinheit nach einer der genannten Ausführungsvarianten oder Kombinationen davon, wobei sich das erfindungsgemässe Verfahren dadurch auszeichnet,
- dass ein Drehknopf manuell in eine der möglichen Wahlpositionen gedreht wird,
- dass mit einem Winkelgeber eine momentane Position des Drehknopfs gemessen wird,
- dass eine Wahlposition mit Hilfe des Winkelgebers detektiert wird, sobald der Winkelgeber in einem für die Wahlposition vorgegebenen Winkelbereich liegt, und
- dass die detektierte Wahlposition zum Auslösen einer Funktion verwendet wird.

Eine Ausführungsvariante des erfindungsgemässen Verfahrens besteht darin, dass der Drehknopf im vorgegebenen Winkelbereich einer Wahlposition arretiert wird.

Die erwähnten Ausführungsvarianten der Bedieneinheit und des Verfahrens lassen sich beliebig kombinieren. Es sind lediglich diejenigen Kombinationen ausgeschlossen, die durch deren Kombination zu einem Widerspruch führen würden.

### KURZE BESCHREIBUNG DER FIGUREN

Ausführungsbeispiele der vorliegenden Erfindung werden nachstehend anhand von Figuren noch näher erläutert. Diese dienen lediglich zur Erläuterung und sind nicht einschränkend auszulegen. Es zeigen
- Fig. 1: eine erfinderische Bedieneinheit mit einem Kassamodul, die auf einer Standsäule montiert sind, in einer perspektivischen Darstellung,
- Fig. 2: einen Schnitt durch die erfinderische Bedieneinheit entlang einer Drehachse eines manuell betätigbaren Drehknopfes,
- Fig. 3: eine Detailansicht gemäss Fig. 2 mit magnetischen Arretiereinheiten und
- Fig. 4: eine Explosionsdarstellung der mit der Drehachse verbundenen Elementen der vorliegenden Erfindung.

### DETAILLIERTE BESCHREIBUNG DER ERFINDUNG

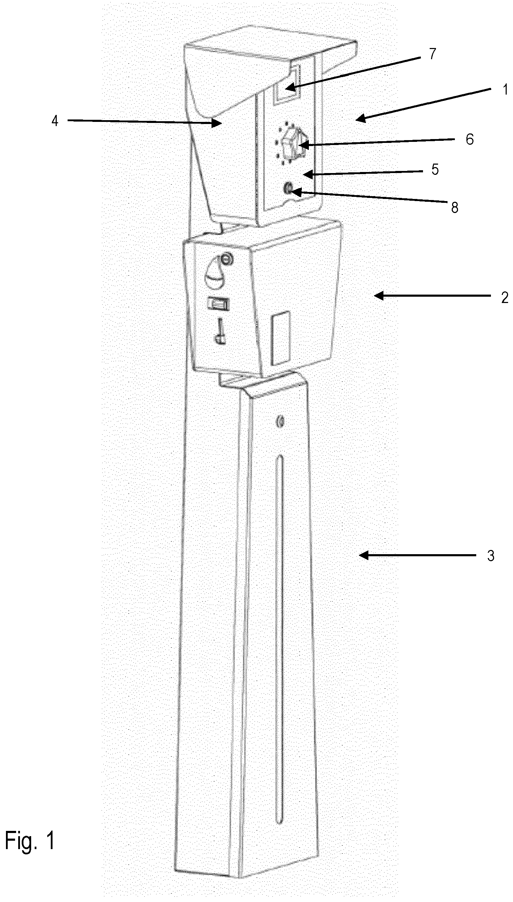

Die Fig. 1 zeigt in perspektivischer Darstellung eine erfindungsgemässe Bedieneinheit 1, die zusammen mit einem Kassenmodul 2 auf einer Standsäule 3 montiert ist. Es wird aber ausdrücklich darauf hingewiesen, dass die erfindungsgemässe Bedieneinheit 1 unabhängig des Kassenmoduls 2 und/oder der Standsäule 3 verwendet werden kann.

Die Bedieneinheit 1 besteht aus einem Gehäuse 4 mit einer transparenten Aussenwand 5, durch die eine im Gehäuse 4 gelagerte Drehachse (in Fig. 1 nicht ersichtlich) führt, wobei am äusseren Ende der Drehachse ein Drehknopf 6 zur manuellen Einstellung eines Waschprogrammes vorgesehen ist. Ferner sind auf der transparenten Aussenwand 5 eine Anzeigeeinheit 7 und ein Druckknopf 8 vorgesehen. Während der Druckknopf 8 zur Bestätigung einer Auswahl oder als Start/Stopp-Druckknopf verwendet werden kann, ist die Anzeigeeinheit 7 zur Anzeige eines Waschprogramms vorgesehen, das mit der entsprechenden Position des Drehknopfes 6 übereinstimmt. Bei einer weiteren Ausführungsvariante der vorliegenden Erfindung ist es vorgesehen, den jeweils gültigen Preis für das mit dem Drehknopf 6 gewählte Programm anzuzeigen. Alternativ kann auch ein Restguthaben angezeigt werden, das dem Benutzer nach einer Vorauszahlung und bei Auswahl eines selektierten Programms angezeigt wird.

In der in Fig. 1 dargestellten Ausführungsvariante der erfindungsgemässen Bedieneinheit 1 deckt die Anzeigeeinheit 7 ein kleiner Bereich der transparenten Aussenwand 5 ab. Denkbar ist bei einer weiteren Ausführungsvariante der vorliegenden Erfindung, dass die gesamte transparente Aussenwand 5 als Anzeigeeinheit 7 abdeckt, womit sich äusserst flexible Darstellungsmöglichkeiten für das gewählte Programm und deren Preise (oder auch andere Inhalte, wie Werbung und dgl.) eröffnen. Die Anzeigeeinheit 7 kann dann beispielsweise als berührungsempfindliches Display ausgebildet sein, der auch Eingaben des Benutzers erlaubt. Bei einer solchen Ausführungsvariante der Anzeigeeinheit 7 wird kein Druckknopf 8 benötigt.

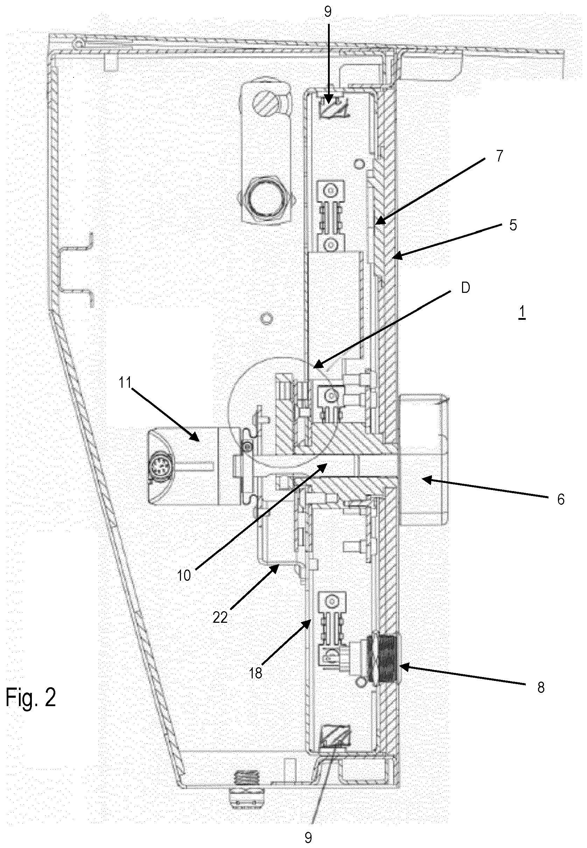

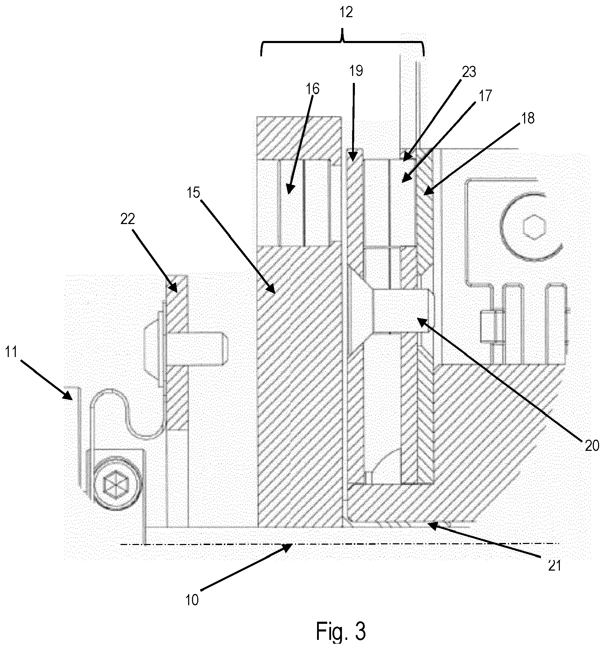

Fig. 2 zeigt einen Schnitt durch die erfindungsgemässe Bedieneinheit 1 entlang einer Längsachse einer Drehachse 10, die durch die transparente Aussenwand 5 hindurchgeführt ist und am äusseren Ende der Drehachse 10 den Drehknopf 6 aufweist, wie dies im Zusammenhang mit den Ausführungen zu Fig. 1 bereits erläutert worden ist. Ausgehend vom Drehknopf 6 in Richtung Innenraum des Gehäuses 4 ist nach der Durchführung durch die transparente Aussenwand 5 zunächst ein flexibel einstellbares Arretiermodul 12 (siehe Fig. 3) mit noch zu erläuternden Arretiereinheiten und anschliessend ein Winkelgeber 11 vorgesehen. Während im Arretiermodul 12 die möglichen vordefinierbaren Wahlpositionen 14 (Programmwahl) entweder mittels mechanischen und/oder magnetischen Arretiereinheiten vordefiniert werden können, um dem Benutzer eine taktile Wahrnehmung über eine mögliche Programmauswahl zu geben, auf welcher der Drehknopf 6 momentan steht, wird mit dem Winkelgeber 11 ein Absolutwinkel des Drehknopfes 6 in Bezug auf einen Referenzwinkel ermittelt. Dieser Absolutwinkel wird zur Programmwahl verwendet, indem in einer nicht dargestellten, in der Bedieneinheit 1 enthaltenen Recheneinheit eine Wahlposition bestimmt wird, indem der aktuelle Absolutwinkel mit den möglichen Winkelbereichen, die Wahlpositionen darstellen, verglichen werden, wobei diejenige Wahlposition bzw. dasjenige Programm bestimmt wird, in dessen Winkelbereich der aktuelle Absolutwinkel fällt. Damit wird die Programmwahl über den Winkelgeber 11 und der mit diesem verbundenen Recheneinheit getroffen. Das Arretiermodul 12 mit den Arretiereinheiten ist lediglich dazu da, dem Benutzer eine taktile Rückmeldung über eine mögliche Wahlposition zu geben. Die Auswahl des durch den Drehknopf 6 angewählten Programms kann dann beispielsweise durch Betätigen des Druckknopfes 8 erfolgen. Damit wurde in vorteilhafterweise eine Bedieneinheit 1 geschaffen, die einerseits sehr bedienerfreundlich ist, andererseits eine präzise und robuste Auswahl eines Waschprogramms erlaubt. Überdies lässt sich die erfindungsgemässe Bedieneinheit 1 einfach programmieren und somit an neue Gegebenheiten anpassen.

Fig. 3 zeigt das in Fig. 2 angedeutete Detail D im Bereich des Arretiermoduls 12, dass einerseits aus einem Exzenter 15 mit einem Permanentmagneten 16 besteht. Der Exzenter 15 ist mit der Drehachse 10 (Fig. 2) wirkverbunden, so dass sich der Exzenter 15 im Gleichlauf mit dem Drehknopf 6 am anderen Ende der Drehachse 10 dreht. Anderseits umfasst das Arretiermodul 12 eine Halterung 18 mit Ausnehmungen 23 zum Aufnehmen von Gegenpolen 17, die mit dem Permanentmagneten 16 des Exzenters 15 interagieren können. Es werden so viele Gegenpole 17 in der Halterung 18 vorgesehen, wie es Programme zum Auswählen gibt, wobei eine Kombination des Permanentmagneten 16 mit einem Gegenpol 17 im Folgenden auch etwa als Arretiereinheit bezeichnet wird. Die Drehachsendurchführung 21 ist in die Halterung 18 integriert.

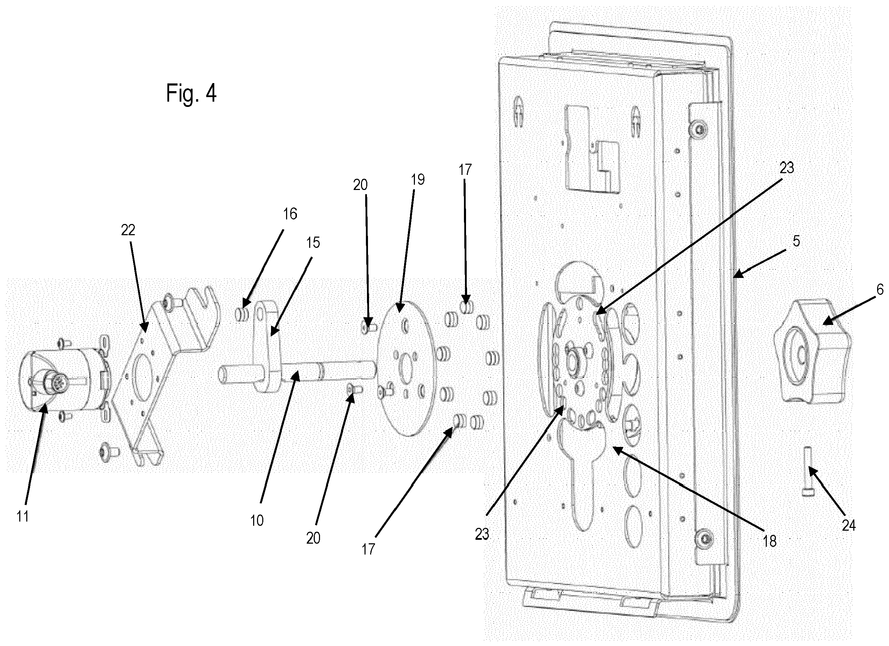

In Fig. 4 ist eine Explosionsdarstellung der erfindungsgemässen Bedieneinheit 1 mit den im Gehäuse 4 enthaltenen Bestandteilen abgebildet. Der guten Übersichtlichkeit halber sind jedoch nicht alle Bestandteile gezeigt.

Ausgehend von der transparenten Wand 5 befindet sich auf deren Rückseite im Gehäuse 4 die Halterung 18, durch die die Drehachse 10 hindurchgeführt ist und in der konzentrisch angeordnete Ausnehmungen 23 zur Aufnahme von Gegenpolen 17 vorgesehen sind. Wie bereits erwähnt werden nur so viele Gegenpole 17 an ausgewählten Positionen in die Halterung 18 eingesetzt, wie Programme zur Auswahl angeboten werden. Massgebend ist selbstverständlich die Anordnung der Gegenpole 17, da diese die Position (Winkelposition) für ein entsprechendes Programm bilden. Diese Position muss mit dem durch den Winkelgeber 11 gemessenen Absolutwinkelbereich bzw. Absolutwinkel für dieses Programm übereinstimmen. Hierfür ist eine Eingabemaske für die Programmierung (in Fig. 4 nicht dargestellt) vorgesehen, in der mindestens einer der folgenden Parameter definiert werden:
- Anzahl auswählbarer Programme;
- Name des Programmes;
- Absolutwinkelbereich oder Absolutwinkel, in dem ein spezifisches Programm auswählbar ist;
- Farbcode der Leuchtmittel für die Hinterleuchtung, sofern eine spezifische Farbe für die Hinterleuchtung des jeweiligen Programms gewünscht wird;
- Information über Programmwahl für den Benutzer zur Anzeige auf der Anzeigeeinheit 7, wenn dieses Programm ausgewählt wird;
- Tarif, der bei Auswahl dieses Programms auf der Anzeigeeinheit 7 angezeigt werden soll;
- Vergünstigung des Tarifs;
- Vergünstigung des Tarifs in Abhängigkeit des Zeitpunkts der Programmwahl.

Sind die gewünschten Gegenpole 17 in den Ausnehmungen 23 der Halterung 18 positioniert, wird die Anpressscheibe 19 mittels Befestigungsmittel 20 mit der Halterung 18 fest verbunden, so dass die Gegenpole 17 in ihrer Position ebenfalls fixiert werden. Als nächstes wird die Drehachse 10 durch die Mittenbohrung der Anpressscheibe 19, durch die Halterung 18 und schliesslich durch die Drehachsendurchführung 21 geführt. Am äusseren Ende der Drehachse 10 wird schliesslich der Drehknopf 6 beispielsweise mittels Schraube 24 fixiert. Die Drehachse 10 kann damit in Richtung der Längsachse nicht mehr bewegt werden. Hingegen kann die Drehachse 10 frei um die Längsachse der Drehachse 10 gedreht werden.

In Fig. 4 ist der Exzenter 15 mit dem Permanentmagneten 16 deutlich erkennbar. Der radiale Abstand des Permanentmagneten 16 von der Drehachse 10 entspricht dem radialen Abstand der Gegenpole 17 von der Drehachse 10, so dass der Permanentmagnet 16 mit jeweils einem Gegenpol 17 (eine Arretiereinheit) interagieren kann.

Schliesslich folgt am diesseitigen Ende der Drehachse 10 der Winkelgeber 11, welcher auf einer Winkelgeberbefestigungseinheit 22 drehfest mit der Halterung 18 verbunden ist.

### BEZUGSZEICHEN

- 1: Bedieneinheit
- 2: Kassamodul
- 3: Standsäule
- 4: Gehäuse
- 5: transparente Aussenwand
- 6: Drehknopf
- 7: Anzeigeeinheit
- 8: Druckknopf
- 9: Leuchtmittel, beispielsweise ein LED-Streifen
- 10: Drehachse
- 11: Winkelgeber
- 12: Arretiermodul
- 14: vordefinierbare Wahlposition
- 15: Exzenter
- 16: Permanentmagnet
- 17: Gegenpol
- 18: Halterung
- 19: Anpressscheibe
- 20: Befestigungsmittel
- 21: Drehachsendurchführung
- 22: Winkelgeberbefestigungseinheit
- 23: Ausnehmungen
- 24: Schraube
- D: Detail

## Patentansprüche

1. Bedieneinheit (1) umfassend:
- ein Gehäuse (4) mit mindestens einer transparenten Aussenwand (5) und
- einen Drehknopf (6), der von ausserhalb des Gehäuses (4) manuell bedienbar ist und in vordefinierbare Wahlpositionen drehbar ist,
**dadurch gekennzeichnet,**
- **dass** eine im Gehäuse (4) gelagerte und durch die transparente Aussenwand (5) hindurchgeführte Drehsachse (10) vorhanden ist, an deren äusserem Ende der Drehknopf (6) befestigt ist,
- **dass** ein Winkelgeber (11) mit der Drehachse (10) zur Ermittlung eines Absolutwinkels des Drehknopfes (6) wirkverbunden ist und
- **dass** die Wahlpositionen mit dem Winkelgeber (11) detektierbar sind.

2. Bedieneinheit (1) nach Anspruch 1, **dadurch gekennzeichnet, dass** die Wahlpositionen durch mechanische und/oder magnetische Arretiereinheiten (16, 17) vordefinierbar sind.

3. Bedieneinheit (1) nach Anspruch 1 oder 2, **dadurch gekennzeichnet, dass** der Winkelgeber (11) mit einer Anzeigeeinheit (7) wirkverbunden ist.

4. Bedieneinheit (1) nach Anspruch 3, **dadurch gekennzeichnet, dass** die Anzeigeeinheit (7) kleiner ist als die transparente Aussenwand (5).

5. Bedieneinheit (1) nach Anspruch 4, **dadurch gekennzeichnet, dass** die transparente Aussenwand (5) mit einem Leuchtmittel (9) hinterleuchtet ist, wobei das Leuchtmittel (9) vorzugsweise aus einem in einem Randbereich der transparenten Aussenwand (5) angeordneten LED-Streifen besteht.

6. Bedieneinheit (1) nach einem der Ansprüche 1 bis 3, **dadurch gekennzeichnet, dass** die Anzeigeeinheit (7) und die transparente Aussenwand (5) gleich gross sind.

7. Bedieneinheit (1) nach einem der Ansprüche 2 bis 6, **dadurch gekennzeichnet, dass** die Arretiereinheiten (16, 17) aus Permanentmagneten (16) und entsprechenden Gegenpolen (17) bestehen.

8. Bedieneinheit (1) nach einem der Ansprüche 2 bis 7, **dadurch gekennzeichnet, dass** als Arretiereinheit (16, 17) einerseits ein um die Drehachse (10) mittels Drehknopf (6) drehbarer Exzenter (15) mit einem Permanentmagneten (16) und andererseits eine Dreh-fixierte Halterung (18) zur Aufnahme von Gegenpolen (17) an den Wahlpositionen vorgesehen sind.

9. Bedieneinheit (1) nach einem der vorangehenden Ansprüche, **dadurch gekennzeichnet, dass** der Winkelgeber (11) im Gehäuse (4) angeordnet ist.

10. Bedieneinheit (1) nach einem der vorangehenden Ansprüche, **dadurch gekennzeichnet, dass** ein Kassenmodul (2) ausserhalb des Gehäuses (4) angeordnet ist, wobei das Kassenmodul (2) mit dem Gehäuse (4) wirkverbunden ist.

11. Verfahren zum Betrieb der Bedieneinheit (1) nach einem der Ansprüche 1 bis 10, **dadurch gekennzeichnet,**
- **dass** ein Drehknopf (6) manuell in eine der möglichen Wahlpositionen gedreht wird,
- **dass** mit einem Winkelgeber (11) eine momentane Position des Drehknopfs (6) gemessen wird,
- **dass** eine Wahlposition mit Hilfe des Winkelgebers (11) detektiert wird, sobald der Winkelgeber (11) in einem für die Wahlposition vorgegebenen Winkelbereich liegt, und
- **dass** die detektierte Wahlposition zum Auslösen einer Funktion verwendet wird.

12. Verfahren nach Anspruch 11, **dadurch gekennzeichnet, dass** der Drehknopf (6) im vorgegebenen Winkelbereich einer Wahlposition arretiert wird.
